# EUROPÄISCHE PATENTSCHRIFT

(11) **EP 2 833 497 B1**
(45) Veröffentlichungstag und Bekanntmachung des Hinweises auf die Patenterteilung: **12.10.2016**
(21) Anmeldenummer: 14177109.7
(22) Anmeldetag: 15.07.2014
(51) Int. Cl.: H02G 3/32, F16L 3/12, F16L 33/035

(54) **Befestigungselement**
Fastening element
Élément de fixation

(30) Priorität: 30.07.2013 DE 102013108143
(43) Veröffentlichungstag der Anmeldung: 04.02.2015
(73) Patentinhaber: Murrelektronik GmbH, 71570 Oppenweiler (DE)
(72) Erfinder: Greiner, Michael, 74427 Fichtenberg (DE); Ulrich, Thomas, 71522 Backnang (DE)
(74) Vertreter: Prinz & Partner mbB

(56) Entgegenhaltungen:
- DE-A1-102004 028 584
- DE-A1-102006 029 201
- DE-U1- 20 311 241

## Beschreibung

Die Erfindung betrifft ein Befestigungselement für zumindest ein Kabel oder eine Leitung.

Aus dem Stand der Technik sind verschiedene Befestigungselemente für Leitungen oder Kabel bekannt. Diese Befestigungselemente werden beispielsweise zur ortsfesten Montage einer Leitung oder eines Kabels verwendet. Eine weitere Anwendung ist die Fixierung der gegenseitigen Lage einzelner Kabel eines Kabelstranges zueinander, sodass die Zuordnung der Kabel oder der an den Kabeln montierten Stecker zu korrespondierenden Steckplätzen einfacher ist. Die Kabel können vor der Demontage der Stecker am Befestigungselement fixiert werden, sodass auch bei abgezogenen Steckern die Position der Kabel zueinander festgelegt ist. Bei erneuter Montage der Stecker ist so eine Verwechslung der Steckplätze ausgeschlossen. Gerade bei solchen Anwendungen sind Befestigungselemente erwünscht, die eine schnelle und einfache Montage der Kabel am Befestigungselement aber auch ein schnelles Lösen des Kabels ermöglichen.

Aus der DE 10 2006 029 201 A1 ist eine Befestigungsanordnung für eine Schlauchleitung an einem Haushaltsgerät bekannt, die nach Art einer Schlauchschelle ausgeführt ist. Die Schlauchschelle weist zwei miteinander verbindbare Enden auf, von denen das eine eine U-förmige Aufnahme bildet, deren äußerer Schenkel mit nach innen gerichteten Rastzähne versehen ist, während der innere Schenkel einen glatten Abstützschenkel bildet. Das andere Ende ist mit nach außen weisenden Rastzähnen versehen, die mit den Rastzähnen des anderen Endes in Eingriff gelangen können.

Aus der DE 203 11 241 U1 ist eine Schlauchschelle bekannt, die ebenfalls zwei miteinander verbindbare Enden aufweist, von denen das eine eine U-förmige Aufnahme bildet, deren äußerer Schenkel mit nach innen gerichteten Rastzähne versehen ist, während der innere Schenkel einen glatten Abstützschenkel bildet. Das andere Ende ist mit nach außen weisenden Rastzähnen versehen, die mit den Rastzähnen des anderen Endes in Eingriff gelangen können. Zusätzlich ist das Ende, das mit den nach außen weisenden Rastzähnen versehen ist, mit einer Zunge versehen, die ein unbeabsichtigtes Lösen verhindern soll.

Aus der DE 10 2004 028 584 A1 ist eine Haltevorrichtung für Schläuche oder Kabel bekannt, die zwei über ein Scharnier beweglich aneinander befestigte Schließbügel aufweist. Die vom Scharnier abgewandten Enden der Schließbügel sind mit einer Rastgestaltung versehen, so dass sie in einer geschlossenen Stellung fixiert werden können.

Aufgabe der Erfindung ist es, ein Befestigungselement bereitzustellen, das eine schnelle und einfache Montage und Demontage eines Kabels oder einer Leitung ermöglicht.

Zur Lösung der Aufgabe ist ein Befestigungselement für zumindest ein Kabel oder eine Leitung vorgesehen, mit zumindest einer Aufnahme für das Kabel oder die Leitung. Die Aufnahme weist einen Abstützbereich, ein Halteelement und ein Verriegelungselement auf, wobei das Verriegelungselement blattfederartig ausgeführt ist und mit dem Halteelement derart zusammenwirken kann, dass dieses in einer das Kabel oder die Leitung haltenden Stellung so fixiert ist, dass der Abstützbereich und das Haltelement einen im Wesentlichen zylindrischen Aufnahmeraum bilden. Des Weiteren ist eine mit dem Verriegelungselement zusammenwirkende Lösevorrichtung vorgesehen, mittels der das Verriegelungs-element vom Halteelement gelöst werden kann, sodass dieses freigegeben ist, wobei zumindest zwei Aufnahmen vorgesehen sind, so dass die Position mehrerer Kabel zueinander fixiert werden kann, und wobei die Lösevorrichtung einen vom Verriegelungselement in axialer Richtung abstehenden Lösevorsprung aufweist. Die Lösevorrichtung ermöglicht ein einfaches Lösen des Verriegelungselements vom Halteelement, sodass eine einfache und schnelle Freigabe des Halteelements erfolgen kann. Das Verriegelungselement ist blattfederartig ausgebildet, sodass ein einfaches Lösen möglich ist, indem das Verriegelungselement verformt oder verschwenkt wird. Der Lösevorsprung ermöglicht ein direktes Verschwenken oder Biegen des Verriegelungselements. Der Lösevorsprung kann beispielsweise von einem Bediener erfasst und das Verriegelungselement vom Halteelement gelöst werden. Abhängig von der Position und der Größe des Lösevorsprungs ist es auch möglich, den Lösevorsprung mit einem Werkzeug zu bedienen. Ein erfindungsgemäßes Befestigungselement kann beispielsweise im Automobilbereich verwendet werden, um Kabelbäume zu montieren oder demontieren. Vor der Demontage oder Montage der Kabelbäume können die einzelnen Kabel jeweils in eine Aufnahme des Befestigungselements fixiert werden, sodass die gegenseitige Lage der Kabel zueinander festgelegt ist. Dies erleichtert die Zuordnung der Stecker zu den einzelnen Steckplätzen, da die gegenseitige Lage der Stecker bzw. der Kabel vor der Demontage festgelegt ist. Durch die Lösevorrichtung ist nach der Montage der Stecker ein schnelles Lösen des Befestigungselements möglich.

Soll der Lösevorsprung mit einem Werkzeug bedient werden, kann der Lösevorsprung eine Einführschräge aufweisen, die in einer Ebene verläuft, die die Mittelachse des Aufnahmeraums schräg schneidet. Die Einführschräge ist vorzugsweise so angeordnet, dass sich ein Spalt zwischen dem Verriegelungselement und dem Grundkörper des Befestigungselements oder einen anderen, ortsfest am Grundkörper gehaltenen Abschnitt, wie dem Abstützbereich, verjüngt. Wird ein Werkzeug, beispielsweise ein Schraubendreher in diesen Spalt eingeschoben, wird das Verriegelungselement vom Grundkörper weg gedrängt und somit vom Halteelement gelöst. Zusätzlich kann die Einführschräge das Einschieben eines solchen Werkzeugs erleichtern.

Das Halteelement kann bezüglich des Aufnahmeraums auf einer radialen Außenseite Rastelemente aufweisen und das Verriegelungselement auf einer radialen Innenseite mit den Rastelementen zusammenwirkende zweite Rastelemente. In einer solchen Ausführungsform überdeckt das Verriegelungselement das Halteelement außenseitig, sodass dieses nicht durch eine auf das Halteelement wirkende Zugkraft zusätzlich gegen das Halteelement gedrückt werden kann. Somit ist gewährleistet, dass das Verriegelungselement unabhängig von den auf das Halteelement wirkenden Kräften gelöst werden kann. Gleichzeitig ist aber durch die Federkraft, mit der das Verriegelungselement gegen das Halteelement gedrückt wird, eine zuverlässige Fixierung des Halteelements sichergestellt.

Die Rastelemente sind beispielsweise Rastzähne, die insbesondere in Umfangsrichtung hintereinander angeordnet sind. Dies ermöglicht eine Anpassung der Größe des Aufnahmeraums, indem verschiedene Rastzähne miteinander verrasten. Das Halteelement kann soweit gegen das Verriegelungselement verschoben werden, bis die gewünschte Größe des Aufnahmeraums erreicht ist.

Am Verriegelungselement kann, insbesondere auf der der Aufnahme abgewandten Seite, ein Federelement vorgesehen sein, dass das Verriegelungselement abstützt. Durch dieses Federelement wird eine zusätzliche Federkraft auf das Verriegelungselement ausgeübt, so dass eine größere Haltekraft für das Halteelement bereitgestellt ist.

Vorzugsweise weist das Verriegelungselement einen Federabschnitt auf und das Federelement greift zwischen dem Federabschnitt und dem freien Ende des Verriegelungselements, insbesondere zwischen dem Federabschnitt und den Rastelementen, an. Der Schwenkpunkt des Verriegelungselements ist dadurch so positioniert, dass das Verriegelungselement zuverlässig vom Halteelement gelöst werden kann und insbesondere die Rastelemente nicht mehr in Eingriff miteinander sind.

Der Abstützbereich kann zusätzlich einen Gegenhalterabschnitt aufweisen, der auf der bezüglich des Aufnahmeraums radialen Innenseite des Verriegelungselements beabstandet von diesem angeordnet ist. Zwischen dem Gegenhalterabschnitt und dem Verriegelungselement ist dadurch ein Spalt gebildet, in den das Halteelement eingeschoben und in diesem fixiert werden kann. Dieser Spalt ist so ausgebildet, dass das Halteelement beim Einschieben zwischen dem Gegenhalterabschnitt und dem Verriegelungselement geklemmt und gegen das Verriegelungselement gedrückt wird, sodass die Rastelemente des Halteelements in die Rastelemente des Verriegelungselements eingreifen. Dieser Gegenhalterabschnitt ermöglicht ein Schließen des Aufnahmeraums auch bei nicht eingelegtem Kabel, da ein Gegenlager gebildet ist, das ein Ausweichen des Halteelements nach innen in den Aufnahmeraum und somit weg vom Verriegelungselement verhindert. Zudem kann der Gegenhalterabschnitt eine Auflage für ein Werkzeug bilden, auf der das Werkzeug abgestützt werden kann, wenn dieses am Lösevorsprung angreift.

Der Aufnahmespalt kann gerade ausgebildet sein. Vorzugsweise verläuft der Aufnahmespalt aber gekrümmt, wobei der Gegenhalterabschnitt insbesondere zumindest abschnittsweise konvex und das Verriegelungselement zumindest abschnittsweise konkav zum Gegenhalterabschnitt gekrümmt sind. Das Halteelement ist in dieser Ausführungsform ebenfalls gekrümmt ausgebildet, so dass sich dieses zum einen an ein Kabel oder eine Leitung anlegen kann und zum anderen flächig am Gegenhalterabschnitt und am Verriegelungselement anliegen kann. Vorzugsweise ist das Halteelement so gekrümmt, dass das freie Ende des Halteelements vor dem Aufnahmespalt liegt, wodurch ein einfaches Einschieben in den Aufnahmespalt, beispielsweise auch mit einer Hand möglich ist.

Am Befestigungselement kann eine an den Aufnahmespalt anschließende Aussparung für das Halteelement vorgesehen sein, in die das Halteelement eintauchen kann, wenn Kabel mit kleinerem Durchmesser befestigt werden sollen. In dieser Ausführungsform kann sich also das Halteelement durch den Aufnahmespalt in die Aussparung erstrecken.

Vorzugsweise steht das Verriegelungselement bezüglich des Aufnahmeraums in axialer Richtung über das Halteelement vor, sodass das Halteelement in axialer Richtung vollständig vom Verriegelungselement überdeckt ist. Durch den über das Halteelement vorstehenden Abschnitt des Verriegelungselements kann beispielsweise der Lösevorsprung gebildet sein, sodass ein einfaches Einschieben eines Werkzeugs möglich ist.

Um eine runde Leitung oder ein Kabel zu fixieren, weist der Abstützbereich eine insbesondere konkav gekrümmte Anlagefläche auf.

Vorzugsweise ist vorgesehen, dass die Längsrichtungen der Aufnahmen übereinstimmen. Das Befestigungselement ist beispielsweise einstückig aus Kunststoff hergestellt, sodass keine losen Teile vorhanden sind.

Das Verriegelungselement, das Halteelement und/oder der Abstützbereich können einstückig ausgebildet sein, sodass keine Bauteile vorhanden sind, die verloren gehen können Dies erleichtert zudem das Fixieren eines Kabels in der Aufnahme, da keine zusätzlichen losen Bauteile gehalten und fixiert werden müssen.

Des Weiteren ist es möglich, dass am Halteelement ein Greifelement vorgesehen ist, um das Halteelement besser an und in das Verriegelungselement führen zu können. Dieses Greifelement steht insbesondere senkrecht vom Halteelement ab, sodass dieses einfach greifbar ist.

Weitere Vorteile und Merkmale finden sich in der nachfolgenden Beschreibung in Verbindung mit den beigefügten Zeichnungen. In diesen zeigen:
- Figur 1 eine perspektivische Ansicht eines erfindungsgemäßen Befestigungselements,
- Figur 2 eine Detailansicht einer Aufnahme des Befestigungselements aus Figur 1 in geöffnetem Zustand,
- Figur 3 die Aufnahme aus Figur 2 in geschlossenem Zustand,
- Figur 4 eine perspektivische Detailansicht der Aufnahme aus Figur 2,
- Figur 5 eine zweite perspektivische Detailansicht der Aufnahme aus Figur 2,
- Figur 6 eine perspektivische Ansicht einer zweiten Ausführungsform eines erfindungsgemäßen Befestigungselements,
- Figur 7 eine perspektivische Detailansicht einer Aufnahme des Befestigungselements aus Figur 6,
- Figur 8 eine perspektivische Detailansicht einer Aufnahme einer dritten Ausführungsform eines erfindungsgemäßen Befestigungselements,
- Figur 9 eine Detailansicht einer Aufnahme des Befestigungselements aus Figur 8 in geöffnetem Zustand, und
- Figur 10 die Aufnahme aus Figur 9 in geschlossenem Zustand.

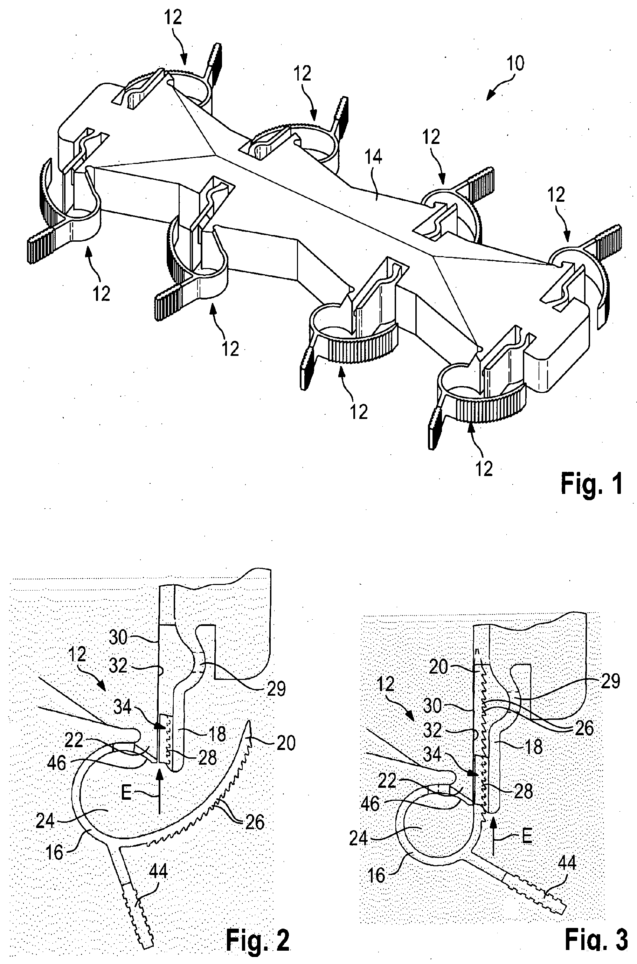

In Figur 1 ist ein Befestigungselement 10 gezeigt, an dem mehrere Kabel oder Leitungen befestigt werden können. Das Befestigungselement 10 hat dazu mehrere, in der hier gezeigten Ausführungsform acht, Aufnahmen 12, in welchen jeweils ein oder mehrere Kabel oder Leitungen befestigt werden kann.

Ein solches Befestigungselement 10 wird beispielsweise im Elektronikbereich verwendet, um die Lage verschiedener Kabel, die in einem Kabelbaum zusammengefasst sind, festzulegen. Die Kabel werden vor dem Abziehen von den Steckplätzen eines Feldbusmoduls in die einzelnen Aufnahmen 12 eingelegt und in diesen fixiert, sodass auch nach dem Abziehen der Stecker die Lage der Kabel und Stecker zueinander festgelegt ist. Dies erleichtert einem Monteur auch bei fehlender Beschriftung der einzelnen Stecker oder Kabel, diese wieder den richtigen Steckplätzen zuzuordnen und somit die Kabel in der richtigen Positionierung und Reihenfolge anzuschließen. Anschließend kann das Befestigungselement 10, wie nachfolgend erläutert wird, einfach demontiert werden.

Die Aufnahmen 12 sind jeweils an den Längskanten eines Grundkörpers 14 angeordnet, wobei auf jeder Seite des Grundkörpers 14 vier Aufnahmen 12 vorgesehen sind. Die Aufnahmen 12 sind paarweise gegenüberliegend angeordnet. Die Längsachsen der Aufnahmen 12 stimmen überein, das heißt die eingelegten Kabel liegen im Wesentlichen parallel zueinander. Die Anzahl, die Position und die Orientierung der Aufnahmen 12 kann allerdings unabhängig von der hier gezeigten Ausführungsform beliebig an den Verwendungszweck angepasst werden.

Der Aufbau der Aufnahmen 12 ist im Wesentlichen identisch und wird nachfolgend anhand der Figuren 2 bis 5 erläutert.

Jede der Aufnahmen 12 hat ein Halteelement 16, das in der hier gezeigten Ausführungsform als längliche, biegsame Lasche ausgebildet ist. An der Aufnahme 12 ist des Weiteren ein Verriegelungselement 18 vorgesehen, an dem das freie Ende 20 des Halteelements 16 so fixiert werden kann, dass das Halteelement 16 gemeinsam mit einem fest am Grundkörper fixierten Abstützbereich 22 einen im Wesentlichen zylindrischen Aufnahmeraum 24 bildet (Figur 3).

Wie in den Figuren 2 und 3 zu sehen ist, weist das Halteelement 16 auf seiner bezüglich des Aufnahmeraums 24 radialen Außenseite Rastelemente 26 auf, die als Rastzähne ausgebildet sind.

Diese Rastelemente 26 können mit korrespondierenden zweiten Rastelementen 28, die am Verriegelungselement 18 vorgesehen sind und ebenfalls durch Rastzähne gebildet sind, zusammenwirken, sodass das freie Ende 20 am Verriegelungselement 18 fixiert ist (Figur 3). Die zweiten Rastelemente 28 sind auf der dem Aufnahmeraum 24 zugewandten radialen Innenseite vorgesehen.

Das Verriegelungselement 18 ist blattfederartig ausgebildet und mit einem Federabschnitt 29 schwenkbar am Grundkörper 14 gehalten. Bezüglich des Aufnahmeraums 24 kann das freie Ende des Verriegelungselements radial nach außen bewegt werden. Der Federabschnitt 29 ist S-förmig gekrümmt, mit einem ersten Abschnitt, der sich vom Grundkörper 14 weg erstreckt und vom Aufnahmeraum 24 weg gekrümmt ist, sowie einen zweiten, an den ersten Abschnitt angrenzenden Abschnitt, der zum Aufnahmeraum 24 hin gekrümmt ist.

An der Aufnahme 12 ist des Weiteren ein Gegenhalterabschnitt 30 vorgesehen, der eine im Wesentlichen parallel zum Verriegelungselement 18 verlaufende Anlagefläche 32 aufweist. Zwischen dem Gegenhalterabschnitt 30 und dem Verriegelungselement 18 ist ein Aufnahmespalt 34 gebildet, in den das freie Ende 20 des Haltelements 16 in einer Einschubrichtung E eingeschoben werden kann.

Wird das freie Ende 20 in den Aufnahmespalt 34 eingeschoben, gelangen die Rastelemente 26 mit den zweiten Rastelementen 28 in Eingriff, sodass ein Herausziehen des Halteelements 16 entgegen der Einschubrichtung E nicht möglich ist. Der Aufnahmeraum 24 ist dadurch geschlossen und ein Kabel oder eine Leitung sicher in der Aufnahme gehalten.

Da sowohl am Halteelement 16 wie auch am Verriegelungselement 18 mehrere Rastelemente 26, 28 vorgesehen sind, kann durch Zusammenwirken der verschiedenen Rastelemente 26, 28 die Größe des Aufnahmeraums 24 angepasst werden. Es ist aber auch möglich, dass am Halteelement 16 und/oder am Verriegelungselement 18 nur ein Rastelement 26, 28 vorgesehen ist.

Der Aufnahmespalt 34 ist so dimensioniert, dass das Halteelement 16 in diesem geklemmt wird und die zweiten Rastelemente 28 des blattfederartigen Verriegelungselements 18 gegen die Rastelemente 26 gedrückt werden. Das Halteelement 16 liegt rückseitig an der Anlagefläche 32 des Gegenhalterabschnitts 30 an, kann also nicht bezüglich des Aufnahmeraums 24 radial nach innen ausweichen. Auch ohne eingelegtes Kabel ist so eine sichere Fixierung des Halteelements 16 möglich.

Ein Lösen dieser Verriegelung ist möglich, indem das Verriegelungselement 18 bezüglich des Aufnahmeraums 24 radial nach außen bewegt wird, wodurch die ersten und die zweiten Rastelemente 26, 28 voneinander gelöst werden. Anschließend kann das Halteelement 16 aus dem Aufnahmespalt 34 herausgezogen werden.

Da das Verriegelungselement 18 bezüglich des Halteelements 16 auf der radialen Außenseite angeordnet ist, wirken auf das Verriegelungselement außer den eigenen Federkräften keine zusätzlichen Druckkräfte, sodass ein einfaches Lösen möglich ist.

Um das Verriegelungselement 18 vom Halteelement 16 zu lösen, ist eine Lösevorrichtung 36 vorgesehen, durch die das Verriegelungselement 18 vom Halteelement 16 weg bewegt werden kann.

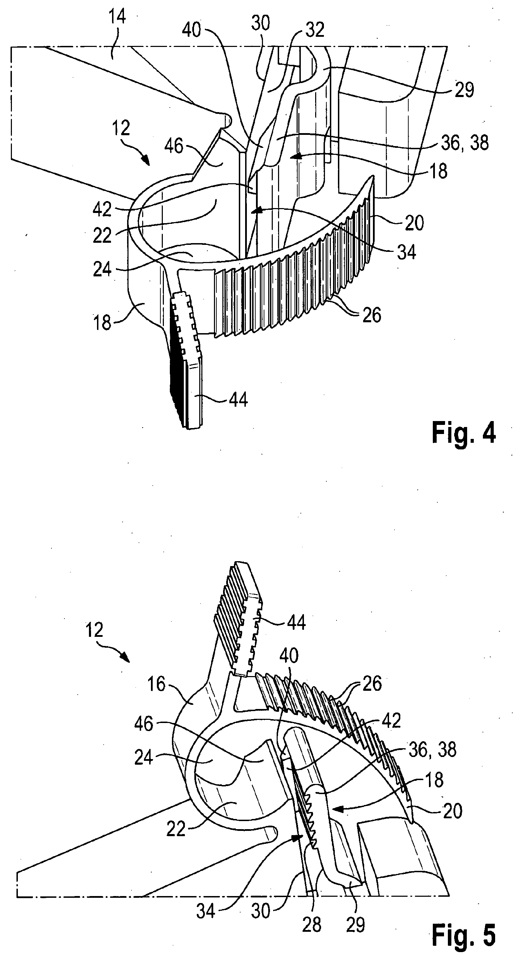

Wie in den Figuren 4 und 5 zu sehen ist, weist die Lösevorrichtung 36 einen Lösevorsprung 38 auf, an dem, wie nachfolgend erläutert wird, ein Werkzeug angesetzt werden kann, um das Verriegelungselement 18 vom Halteelement 16 wegzubewegen.

Die Lösevorrichtung 36 bzw. der Lösevorsprung 38 ist einstückig am Verriegelungselement 18 angeordnet, wobei der Lösevorsprung 38 bezüglich des Aufnahmeraums 24 in axialer Richtung vom Verriegelungselement 18 absteht. Der Lösevorsprung 38 weist eine Einführschräge 40 auf, durch die sich der Aufnahmespalt 34 in axialer Richtung verjüngt. Die Einführschräge 40 ist so angeordnet, dass diese in einer Ebene verläuft, die die Mittelachse des Aufnahmeraums 24 schräg schneidet.

Wird ein Werkzeug, beispielsweise ein Schraubendreher, in axialer Richtung, also seitlich in den Aufnahmespalt 34 eingeschoben, sodass das Werkzeug mit der Einführschräge 40 in Anlage gelangt, wird der Lösevorsprung 38 und somit das Verriegelungselement 18 vom Halteelement 16 weggedrückt. Um diesen Effekt zu verstärken, kann das Werkzeug, unabhängig von der Form des Lösevorsprungs 38 bzw. der Einführschräge 40, auch am Gegenhalterabschnitt 30 abgestützt und um diesen verschwenkt werden, sodass das Verriegelungselement 18 zusätzlich vom Halteelement 16 weg gehebelt werden kann.

Wie in den Figuren 4 und 5 zu sehen ist, ist das Verriegelungselement 18 breiter als das Halteelement 16, steht also über dieses in axialer Richtung vor. Auf der Rückseite des Lösevorsprungs 38 ist des Weiteren durch die Einführschräge 40 ein Absatz 42 gebildet, an dem Halteelement 16 in eingeschobener Position anliegt, wodurch dieses in axialer Richtung nicht verschoben werden kann, beispielsweise bei einer Zugkraft auf das eingelegte Kabel.

Der Abstützbereich 22 weist, wie in den Figuren 2 und 3 zu sehen ist, eine gekrümmte, insbesondere konkav ausgebildete, also der Form der einzulegenden Leitung oder des Kabels nachgebildete, Anlagefläche 46 auf. Es ist aber auch denkbar, dass der Abstützbereich 22 eben ausgebildet ist oder abhängig von der Form des Halteelements 16 kein separater Abstützbereich 22 vorgesehen ist.

Um das Halteelement 16 einfacher um das Kabel oder die Leitung herum und an das Verriegelungselement 18 führen zu können, ist am Halteelement 16 des Weiteren ein Greifelement 44 vorgesehen, das in der hier gezeigten Ausführungsform senkrecht vom Halteelement 16 absteht.

Das Befestigungselement 10 ist vorzugsweise einstückig aus Kunststoff hergestellt, wobei eine einfache Herstellung des Befestigungselements 10, beispielsweise in einem Spritzgussverfahren möglich ist. Da das Befestigungselement 10 keine Hinterschnitte aufweist, ist eine einfache Herstellung ohne zusätzliche Schieber möglich.

Da das Befestigungselement 10 einstückig hergestellt ist, können keine beweglichen Teile, beispielsweise Kabelbinder oder ähnliche verloren gehen. Zudem ist die Handhabung vereinfacht, da keine zusätzlichen Bauteile montiert werden können. Insbesondere sind das Verriegelungselement 18, das Halteelement 16 und/oder der Abstützbereich 22 einstückig ausgebildet.

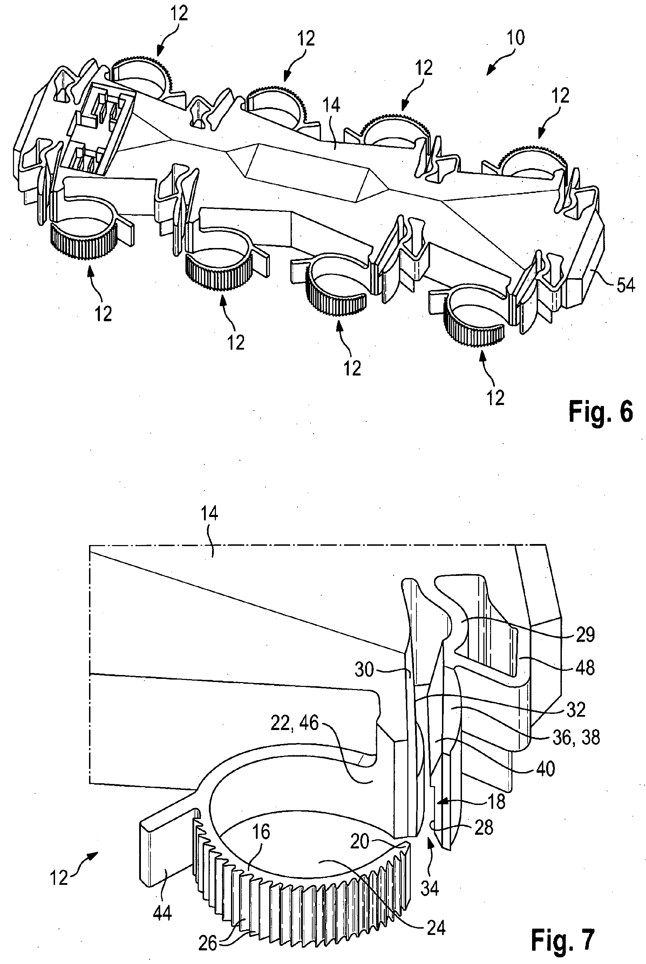

Eine zweite Ausführungsform eines erfindungsgemäßen Befestigungselements 10 ist in den Figuren 6 und 7 dargestellt. Das Befestigungselement 10 entspricht im Wesentlichen dem in den Figuren 1 bis 5 dargestellten Befestigungselement 10.

Die Aufnahmen 12 haben allerdings statt einer geraden Anlagefläche 32 eine konvex zum Verriegelungselement 18 gewölbte Anlagefläche 32. Das Verriegelungselement 18 ist konkav zur Anlagefläche 32 gebogen, so dass der Aufnahmespalt 34 ebenfalls gebogen, insbesondere einer Kreis- oder Spiralbahn um den Aufnahmeraum 24 folgend, verläuft.

Das Halteelement 16 ist ebenfalls gekrümmt ausgebildet, so dass sich dieses an ein rundes Kabel oder eine Leitung anlegen kann. Die Krümmung entspricht im Wesentlichen der Krümmung des Aufnahmespaltes 34, so dass das Halteelement 18 in der geschlossenen Position flächig an der Anlagefläche 32 anliegt. Das Verriegelungselement 18 liegt flächig am Halteelement 16 auf, so das mehrere Rastelemente 26, 28 miteinander in Eingriff gelangen, wodurch das Halteelement besser fixiert ist.

Das Halteelement 16 ist zudem derart vorgebogen, dass sich das freie Ende 20 vor dem Aufnahmespalt 34 befindet. Dadurch ist ein einfaches Einschieben des Halteelements 16 in den Aufnahmespalt 34 ohne aufwändige Zentrierung, insbesondere auch mit einer Hand, möglich.

Des Weiteren ist auf der dem Aufnahmespalt 34 abgewandten Seite des Verriegelungselements 18 ein zusätzliches Federelement 48 vorgesehen. Das Federelement 48 greift zwischen dem Federabschnitt 29 und dem freien Ende am Verriegelungselement 18 und unterhalb des Anlagebereichs des Verriegelungselements 18 an der Anlagefläche 32 an.

Durch das Federelement wird das Verriegelungselement mit einer größeren Federkraft gegen die Anlagefläche 32 gedrückt, wodurch das Verriegelungselement 18 in der geschlossenen Position sicherer gehalten ist.

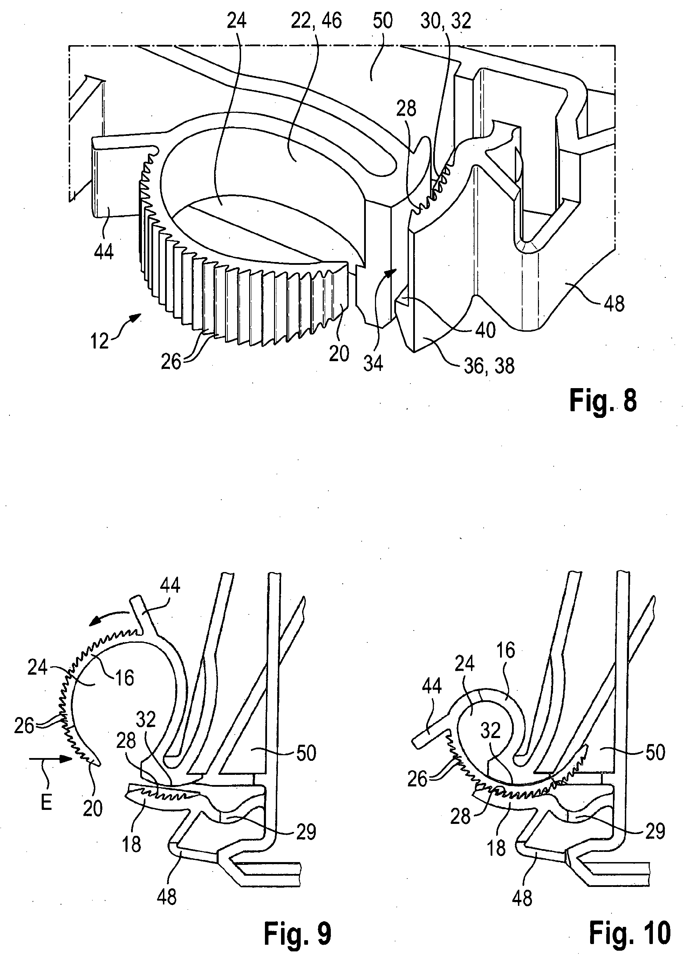

In den Figuren 8 bis 10 ist eine Aufnahme 12 einer dritten Ausführungsform eines erfindungsgemäßen Befestigungselements 10 gezeigt. Der Aufbau dieses Befestigungselements 10 entspricht im Wesentlichen dem in den Figuren 6 und 7 gezeigten Befestigungselement 10.

Bei diesem Befestigungselement sind allerdings Verstärkungsstege 52, die am Grundkörper 14 vorgesehen sind, sowie der Federabschnitt 29 des Verriegelungselements 18 teilweise unterbrochen, so dass eine an den Aufnahmespalt 34 anschließende Aussparung 50 für das Halteelement 16 gebildet ist.

Werden Leitungen oder Kabel mit relativ großem Durchmesser befestigt, erstreckt sich das Halteelement 16 in geschlossener Position lediglich in den Aufnahmespalt 34. Werden Leitungen mit kleinerem Durchmesser befestigt, kann der Aufnahmeraum 24 verkleinert werden, indem das Halteelement 16 weiter in den Aufnahmespalt 34 eingeschoben wird. Das freie Ende 20 des Halteelements 16 kann in die Aussparung ragen, so dass der Aufnahmeraum 24 weiter verkleinert werden kann.

Da durch das Federelement 48 eine zusätzliche Stützfunktion des Verriegelungselements 18 bereitgestellt wird, kann der Federabschnitt 29 teilweise ausgeschnitten werden. Durch das Federelement 48 wird dennoch eine ausreichende Federkraft auf das Verriegelungselement 18 ausgeübt.

Durch die Aussprung 50 in Verbindung mit dem gekrümmten Aufnahmespalt 34 ist sichergestellt, dass das Halteelement nur im Bereich der Rastelemente 26, 28 mit dem Verriegelungselement in Anlage ist. Der Schwenkpunkt des Verriegelungselements 18 ist so gewählt, dass der mit Rastelementen 28 versehene Bereich einfach, insbesondere mit einem Werkzeug, vom Halteelement 16 abgehoben werden kann, so dass ein einfaches Lösen des Halteelements 16 möglich ist.

Die Aufnahmen 12 der gezeigten Befestigungselemente 10 sind vorzugsweise so dimensioniert, dass Kabel oder Leitungen mit einem Durchmesser von 3mm bis 10mm, vorzugsweise von 4mm bis 7mm befestigt werden können.

Wie in den Figuren 1 und 6 zu sehen ist, ist zudem an einem Ende des Grundkörpers 14 eine Fläche 54 vorgesehen, an die ein Bezeichnungsschild aufgeklebt werden kann. Durch dieses Bezeichnungsschild kann beispielsweise die Montagerichtung des Befestigungselements 10 oder der am Befestigungselement 10 gehaltenen Kabel gekennzeichnet werden. Alternativ können bei gleichzeitiger Verwendung mehrerer identischer Befestigungselemente 10 diese durch entsprechende Aufkleber oder Schilder gekennzeichnet werden, um sie unterscheiden zu können.

## Patentansprüche

1. Befestigungselement (10) für zumindest ein Kabel oder eine Leitung, mit einer Aufnahme (12) für das Kabel oder die Leitung, die einen Abstützbereich (22), ein Halteelement (16) und ein Verriegelungselement (18) aufweist, wobei das Verriegelungselement (18) blattfederartig ausgeführt ist und mit dem Halteelement (16) derart zusammenwirken kann, dass dieses in einer das Kabel oder die Leitung haltenden Stellung so fixiert ist, dass der Abstützbereich (22) und das Halteelement (16) einen im Wesentlichen zylindrischen Aufnahmeraum (24) bilden, wobei eine mit dem Verriegelungselement (18) zusammenwirkende Lösevorrichtung (36) vorgesehen ist, mittels der das Verriegelungselement (18) vom Halteelement (16) gelöst werden kann, sodass dieses freigegeben ist, wobei zumindest zwei Aufnahmen (12) vorgesehen sind, so dass die Position mehrerer Kabel zueinander fixiert werden kann, und wobei die Lösevorrichtung (36) einen vom Verriegelungselement (18) in axialer Richtung abstehenden Lösevorsprung (38) aufweist.

2. Befestigungselement nach Anspruch 1, **dadurch gekennzeichnet, dass** der Lösevorsprung (38) eine Einführschräge (40) aufweist, die in einer Ebene verläuft, die die Mittelachse des Aufnahmeraums (24) schräg schneidet.

3. Befestigungselement nach einem der vorhergehenden Ansprüche, **dadurch gekennzeichnet, dass** das Halteelement (16) bezüglich des Aufnahmeraums (24) auf einer radialen Außenseite Rastelemente (26) aufweist und das Verriegelungselement (18) auf der radialen Innenseite mit den Rastelementen (26) zusammenwirkende zweite Rastelemente (28) aufweist.

4. Befestigungselement nach Anspruch 3, **dadurch gekennzeichnet, dass** die Rastelemente (26, 28) Rastzähne sind.

5. Befestigungselement nach einem der vorhergehenden Ansprüche, **dadurch gekennzeichnet, dass** am Verriegelungselement (18), insbesondere auf der der Aufnahme (12) abgewandten Seite, ein Federelement (48) vorgesehen ist, dass das Verriegelungselement (18) abstützt.

6. Befestigungselement nach Anspruch 5, **dadurch gekennzeichnet, dass** das Verriegelungselement einen Federabschnitt (29) aufweist und das Federelement (48) zwischen dem Federabschnitt (29) und dem freien Ende des Verriegelungselements (18) angreift.

7. Befestigungselement nach einem der vorhergehenden Ansprüche, **dadurch gekennzeichnet, dass** der Abstützbereich (22) einen Gegenhalterabschnitt (30) aufweist, der auf der bezüglich des Aufnahmeraums (24) radialen Innenseite des Verriegelungselements (18) beabstandet von diesem angeordnet ist, wobei zwischen Verriegelungselement (18) und Gegenhalterabschnitt (30) ein Aufnahmespalt (34) gebildet ist.

8. Befestigungselement nach Anspruch 7, **dadurch gekennzeichnet, dass** der Aufnahmespalt (34) gekrümmt verläuft, wobei der Gegenhalterabschnitt (30) insbesondere zumindest abschnittsweise konvex und das Verriegelungselement (18) zumindest abschnittsweise konkav gekrümmt sind.

9. Befestigungselement nach Anspruch 7 oder 8, **dadurch gekennzeichnet, dass** eine an den Aufnahmespalt (34) anschließende Aussparung (50) für das Halteelement (18) vorgesehen ist.

10. Befestigungselement nach einem der vorhergehenden Ansprüche, **dadurch gekennzeichnet, dass** das Verriegelungselement (18) in axialer Richtung über das Halteelement (16) vorsteht.

11. Befestigungselement nach einem der vorhergehenden Ansprüche, **dadurch gekennzeichnet, dass** der Abstützbereich (22) eine insbesondere konkav gekrümmte Anlagefläche aufweist.

12. Befestigungselement nach einem der vorhergehenden Ansprüche, **dadurch gekennzeichnet, dass** die Längsrichtungen der Aufnahmen (12) übereinstimmen.

13. Befestigungselement nach einem der vorhergehenden Ansprüche, **dadurch gekennzeichnet, dass** das Befestigungselement (10) einstückig aus Kunststoff hergestellt ist.

14. Befestigungselement nach einem der vorhergehenden Ansprüche, **dadurch gekennzeichnet, dass** das Verriegelungselement (18), das Halteelement (16) und/oder der Abstützbereich (22) einstückig ausgebildet sind.

15. Befestigungselement nach einem der vorhergehenden Ansprüche, **dadurch gekennzeichnet, dass** am Halteelement (16) ein, insbesondere senkrecht abstehendes, Greifelement (44) vorgesehen ist.

## Claims

1. A fastening element (10) for at least one cable or one line, comprising a retainer (12) for the cable or the line, the retainer including a support portion (22), a holding member (16) and a locking member (18), the locking member (18) being configured like a leaf spring and being adapted to cooperate with the holding member (16) such that the latter is fixed in a position holding the cable or line such that the support portion (22) and the holding member (16) define a substantially cylindrical receiving space (24), a release device (36) being provided which cooperates with the locking member (18) and by means of which the locking member (18) can be released from the holding member (16) such that the latter is disengaged, at least two retainers (12) being provided so that the positions of a plurality of cables can be fixed relative to each other, and the release device (36) including a release projection (38) protruding from the locking member (18) in the axial direction.

2. The fastening element according to claim 1, **characterized in that** the release projection (38) includes an insertion slope (40) which extends in a plane that intersects the central axis of the receiving space (24) at an angle.

3. The fastening element according to either of the preceding claims, **characterized in that** the holding member (16) includes latching elements (26) on a radial outer surface with respect to the receiving space (24), and the locking member (18) includes second latching elements (28) on the radial inner surface which cooperate with the latching elements (26).

4. The fastening element according to claim 3, **characterized in that** the latching elements (26, 28) are latching teeth.

5. The fastening element according to any of the preceding claims, **characterized in that** the locking member (18), in particular its side facing away from the retainer (12), has a spring element (48) provided thereon which supports the locking member (18).

6. The fastening element according to claim 5, **characterized in that** the locking member includes a spring section (29), and the spring element (48) engages between the spring section (29) and the free end of the locking member (18).

7. The fastening element according to any of the preceding claims, **characterized in that** the support portion (22) includes a counter support section (30) which is arranged on the radial inner surface of the locking member (18) with respect to the receiving space (24) so as to be spaced apart from the locking member, a receiving gap (34) being formed between the locking member (18) and the counter support section (30).

8. The fastening element according to claim 7, **characterized in that** the receiving gap (34) runs in a curved shape, the counter support section (30) being more particularly convexly curved at least in sections and the locking member (18) being concavely curved at least in sections.

9. The fastening element according to claim 7 or 8, **characterized in that** a recess (50) adjoining the receiving gap (34) is provided for the holding member (18).

10. The fastening element according to any of the preceding claims, **characterized in that** the locking member (18) projects over the holding member (16) in the axial direction.

11. The fastening element according to any of the preceding claims, **characterized in that** the support portion (22) includes a contact surface which in particular is concavely curved.

12. The fastening element according to any of the preceding claims, **characterized in that** the longitudinal directions of the retainers (12) are the same.

13. The fastening element according to any of the preceding claims, **characterized in that** the fastening element (10) is produced from plastic in one piece.

14. The fastening element according to any of the preceding claims, **characterized in that** the locking member (18), the holding member (16) and/or the support portion (22) are formed in one piece.

15. The fastening element according to any of the preceding claims, **characterized in that** the holding member (16) has a grip element (44) provided thereon which more particularly projects perpendicularly.

## Revendications

1. Elément de fixation (10) pour au moins un câble ou une conduite, comportant un logement (12) pour le câble ou la conduite lequel présente une zone de soutien (22), un élément support (16) et un élément de verrouillage (18), l'élément de verrouillage (18) étant réalisé à la manière d'un ressort à lames et étant apte à coopérer avec l'élément support (16) de telle manière que celui-ci soit fixé dans une position retenant le câble ou la conduite de telle sorte que la zone de soutien (22) et l'élément support (16) forment un espace de logement (24) sensiblement cylindrique, un dispositif de détachement (36) coopérant avec l'élément de verrouillage (18) étant prévu, au moyen duquel l'élément de verrouillage (18) peut être détaché de l'élément support (16) de sorte que celui-ci soit libéré, au moins deux logements (12) étant prévus de sorte que la position de plusieurs câbles les uns par rapport aux autres peut être fixée, et le dispositif de détachement (36) présentant une saillie de détachement (38) qui fait saillie de l'élément de verrouillage (18) dans le sens axial.

2. Elément de fixation selon la revendication 1, **caractérisé en ce que** la saillie de détachement (38) présente un chanfrein d'insertion (40) qui s'étend dans un plan coupant l'axe médian de l'espace de logement (24) en biais.

3. Elément de fixation selon l'une des revendications précédentes, **caractérisé en ce que** l'élément support (16) présente des éléments d'enclenchement (26) sur une face extérieure radiale par rapport à l'espace de logement (24) et **en ce que** l'élément de verrouillage (18) présente sur la face intérieure radiale des deuxièmes éléments d'enclenchement (28) qui coopèrent avec les éléments d'enclenchement (26).

4. Elément de fixation selon la revendication 3, **caractérisé en ce que** les éléments d'enclenchement (26, 28) sont des dents d'enclenchement.

5. Elément de fixation selon l'une des revendications précédentes, **caractérisé en ce que** sur l'élément de verrouillage (18), en particulier d'un côté détourné du logement (12), il est prévu un élément ressort (48) qui soutient l'élément de verrouillage (18).

6. Elément de fixation selon la revendication 5, **caractérisé en ce que** l'élément de verrouillage présente un tronçon ressort (29) et **en ce que** l'élément ressort (48) s'engage entre le tronçon ressort (29) et l'extrémité libre de l'élément de verrouillage (18).

7. Elément de fixation selon l'une des revendications précédentes, **caractérisé en ce que** la zone de soutien (22) présente un tronçon de contre-support (30) qui, par rapport à l'espace de logement (24), est agencé sur la face intérieure radiale de l'élément de verrouillage (18) en étant espacé de celui-ci, une fente de logement (34) étant formée entre l'élément de verrouillage (18) et le tronçon de contre-support (30).

8. Elément de fixation selon la revendication 7, **caractérisé en ce que** la fente de logement (34) s'étend de manière courbe, le tronçon de contre-support (30) étant en particulier courbé de manière convexe au moins par tronçons, et l'élément de verrouillage (18) étant courbé de manière concave au moins par tronçons.

9. Elément de fixation selon la revendication 7 ou 8, **caractérisé en ce qu'**il est prévu un évidement (50) pour l'élément support (18) qui se raccorde à la fente de logement (34).

10. Elément de fixation selon l'une des revendications précédentes, **caractérisé en ce que** l'élément de verrouillage (18) fait saillie dans le sens axial au-delà de l'élément support (16).

11. Elément de fixation selon l'une des revendications précédentes, **caractérisé en ce que** la zone de soutien (22) présente une surface d'appui en particulier courbée de manière concave.

12. Elément de fixation selon l'une des revendications précédentes, **caractérisé en ce que** les sens longitudinaux des logements (12) sont coïncidents.

13. Elément de fixation selon l'une des revendications précédentes, **caractérisé en ce que** l'élément de fixation (10) est réalisé d'un seul tenant en matière plastique.

14. Elément de fixation selon l'une des revendications précédentes, **caractérisé en ce que** l'élément de verrouillage (18), l'élément support (16) et/ou la zone de soutien (22) sont réalisés d'un seul tenant.

15. Elément de fixation selon l'une des revendications précédentes, **caractérisé en ce qu'**un élément de prise (44) en particulier perpendiculairement en saillie est prévu sur l'élément support (16).
